# EUROPÄISCHE PATENTSCHRIFT

(11) **EP 0 939 982 B1**
(45) Veröffentlichungstag und Bekanntmachung des Hinweises auf die Patenterteilung: **12.06.2002**
(21) Anmeldenummer: 97949882.1
(22) Anmeldetag: 07.11.1997
(51) Int. Cl.: H02B 1/052

(54) **BEFESTIGUNGSVORRICHTUNG FÜR EIN GEHÄUSE**
FASTENING DEVICE FOR A HOUSING
DISPOSITIF DE FIXATION POUR UN BOITIER

(30) Priorität: 20.11.1996 DE 29620226 U
(43) Veröffentlichungstag der Anmeldung: 08.09.1999
(73) Patentinhaber: SIEMENS AKTIENGESELLSCHAFT, 80333 München (DE)
(72) Erfinder: SABISCH, Willy, D-92245 Kümmersbruck (DE)
(86) Internationale Anmeldenummer: DE9702602
(87) Internationale Veröffentlichungsnummer: WO9823003

(56) Entgegenhaltungen:
- DE-A- 3 149 310
- DE-U- 9 110 337

## Beschreibung

Die Erfindung bezieht sich auf eine Befestigungsvorrichtung für ein Gehäuse mit einer Schnappvorrichtung zum Aufschnappen auf eine Hutschiene und mit am Gehäusesockel angeformten Schraubaugen zur Befestigung auf einer Platte.

Eine gattungsgemäße Befestigungsvorrichtung ist aus der DE 31 49 310 A1 bekannt. Hier ist die Befestigung von elektrischen Installationsgeräten auf Hutprofilschienen offenbart, wozu im Gehäuse des Installationsgerätes geführte, federnd nach innen gedrückte Schieber vorgesehen sind. Deren nach innen weisendes Ende ist mit je einer Nase versehen, die hinter die Hutprofilschiene greift. Die Hutschiene ist hier freistehend angebracht, so daß auch höhere Geräte an der Hutschiene befestigt werden können.

Die DE 91 10 337 U1 offenbart eine Befestigungsvorrichtung mit einer Schnappvorrichtung zum Aufschnappen auf eine Hutschiene. An einem Gehäusesockel sind Schraubaugen zur Befestigung auf einer Platte vorgesehen. Die Schnappvorrichtung weist an der Unterseite des Gehäusesockels eine Rastnase mit einem abgeschrägten Bereich auf, die zur Befestigung auf der Hutschiene dient.

Der Erfindung liegt die Aufgabe zugrunde, eine Befestigungsvorrichtung der obengenannten Art zu schaffen, mit der eine Befestigung von hohen Gehäusen auf einer Hutschiene, die auf einer Platte montiert ist, aufgeschnappt werden können und zugleich auch eine Schraubbefestigung des Gehäuses möglich ist.

Diese Aufgabe wird erfindungsgemäß dadurch gelöst, daß die Unterseite des Gehäusesockels zumindest auf einer Seite der Schnappvorrichtung einen abgeschrägten Bereich mit einem innenseitigen und einem außenseitigen Rand aufweist, wobei im eingebauten Zustand des Gehäuses der außenseitige Rand in Bezug auf die Ebene der Platte einen höheren Abstand als der innenseitige Rand aufweist, und daß die Schraubaugen in diesem Bereich jeweils in einem federnd am Gehäusesockel angebrachten Distanzstück integriert sind, das sich bei Verschraubung auf der Platte abstützt.

Ein Ausführungsbeispiel der Erfindung wird im folgenden anhand einer Zeichnung erläutert.

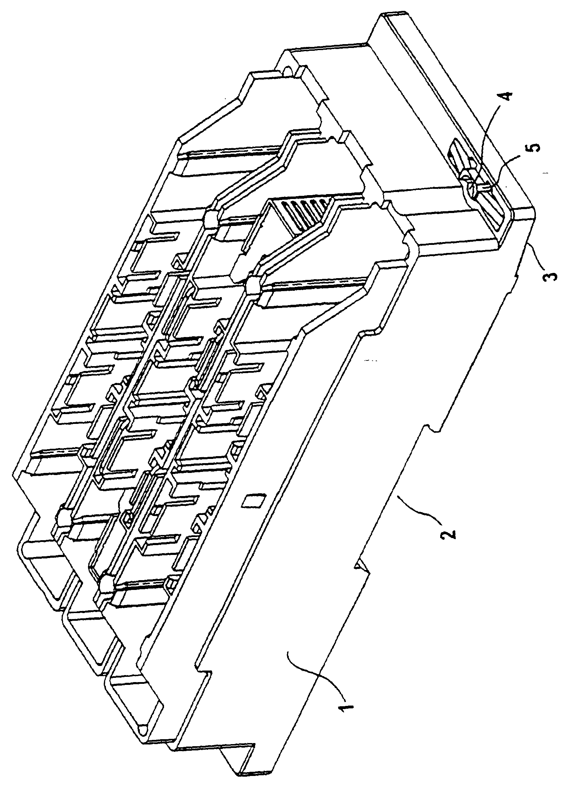

In der Zeichnung ist ein Gehäuse 1 mit einer Schnappvorrichtung 2 zum Aufschnappen auf eine Hutschiene dargestellt. Die Unterseite des Gehäusesockels ist auf der einen Seite der Schnappvorrichtung 2 mit einem abgeschrägten Bereich 3 versehen, so daß das relativ hohe Gehäuse auch auf eine Hutschiene aufschnappbar ist, die auf einer Platte montiert ist. Im abgeschrägten Bereich 3 ist zumindest ein Schraubauge 4 vorhanden, das in einem federnd am Gerätesockel angebrachten Distanzstück 5 integriert ist. Bei Verschraubung auf einer Platte federt dieses Distanzstück 5 gegen die Platte und stützt sich an dieser ab. Ohne dieses federnde Distanzstück 5 würde aufgrund der zwischen Platte und dem Gehäusesockel bestehenden Lücke aufgrund der Abschrägung das Gehäuse an dieser Stelle durch die Hebelwirkung zerbrechen.

Die Erfindung ermöglicht es, daß dasselbe Gerät selbst bei größerer Bauhöhe auf einer Hutschiene befestigt werden kann, die auf einer Platte montiert ist, und bedarfsweise auch eine Schraubbefestigung auf einer Platte vorgenommen werden kann.

Obwohl die vorliegende Erfindung unter Bezugnahme auf die in der beigefügten Zeichnung dargestellte Ausführungsform erläutert ist, sollte berücksichtigt werden, daß damit nicht beabsichtigt ist, die Erfindung nur auf die dargestellte Ausführungsform zu beschränken, sondern alle möglichen Änderungen, Modifizierungen und äquivalente Anordnungen, soweit sie vom Inhalt der Patentansprüche gedeckt sind, einzuschließen.

## Patentansprüche

1. Befestigungsvorrichtung für ein Gehäuse mit einer Schnappvorrichtung (2) zum Aufschnappen auf eine Hutschiene und mit am Gehäusesockel angeformten Schraubaugen (4) zur Befestigung auf einer Platte, **dadurch gekennzeichnet, daß** die Unterseite des Gehäusesockels zumindest auf einer Seite der Schnappvorrichtung (2) einen abgeschrägten Bereich (3) mit einem innenseitigen und einem außenseitigen Rand aufweist, wobei im eingebauten Zustand des Gehäuses der außenseitige Rand in Bezug auf die Ebene der Platte einen höheren Abstand als der innenseitige Rand aufweist, und daß die Schraubaugen (4) in diesem Bereich (3) jeweils in einem federnd am Gehäusesockel angebrachten Distanzstück (5) integriert sind, das sich bei Verschraubung an der Platte abstützt.

## Claims

1. Fastening device for a housing with a snap device (2) for snapping on to a mounting rail and with screw eyes (4) moulded onto the base of the housing for fastening to a plate, **characterised in that** the underside of the base of the housing has a bevelled area (3) with an inside and an outside edge at least on one side of the snap device (3), whereby when the housing is installed the outside edge has a higher clearance in respect of the plane of the plate than the inside edge, and **in that** the screw eyes (4) in this area (3) are each integrated into a spacer (5) attached by a spring arrangement to the base of the housing, said spacer being supported by the plate when screwed in.

## Revendications

1. Dispositif de fixation d'un boîtier comportant un dispositif d'encliquetage (2) destiné à s'encliqueter sur un profilé chapeau et des oeillets taraudés (4) conformés sur l'embase de boîtier et destinés à la fixation sur une plaque, **caractérisé en ce que** la face inférieure de l'embase de boîtier comporte au moins sur un côté du dispositif d'encliquetage (2) une région en biseau (3) présentant un bord intérieur et un bord extérieur ; lorsque le boîtier est monté, le bord extérieur se trouve à une distance supérieure à celle du bord intérieur par rapport au plan de la plaque, et **en ce que** les oeillets taraudés (4) sont intégrés dans cette région (3) respectivement dans une pièce d'écartement (5) qui est montée sur l'embase de boîtier et qui s'appuie sur la plaque lors du vissage.
